# EUROPEAN PATENT APPLICATION

(11) **EP 4 660 843 A1**
(43) Date of publication of application: **10.12.2025**
(21) Application number: 25180819.2
(22) Date of filing: 04.06.2025
(51) Int. Cl.: G06F 16/583, G06F 16/9032

(54) **TECHNIQUES FOR RESOLVING QUERIES**

(30) Priority: 07.06.2024 US 202463657402 P; 06.03.2025 US 202519072591
(71) Applicant: Apple Inc., Cupertino, CA 95014 (US)
(72) Inventor: TAYLOR, Nathan D., Cupertino, 95014 (US); YORK, Kenneth A., Cupertino, 95014 (US); DAWURANG, Nanfwang H., Cupertino, 95014 (US)
(74) Representative: Bateman, Samuel Alec

(57) **Abstract**

The present disclosure generally relates to resolving queries. Some techniques are for responding to queries in accordance with some embodiments. Other techniques are for annotating objects in accordance with some embodiments.

## Description

### CROSS-REFERENCE TO RELATED APPLICATIONS

This application claims priority to U.S. Provisional Patent Application Serial No. 63/657,402, entitled "TECHNIQUES FOR RESOLVING QUERIES" filed June 7, 2024, which is hereby incorporated by reference in its entirety for all purposes.

### BACKGROUND

Understanding context on electronic devices is becoming increasingly difficult. For example, different applications on an electronic device often have different user interfaces and different formats that are not consistent. Accordingly, there is a need to improve techniques for resolving queries.

### SUMMARY

Current techniques for resolving queries are generally ineffective and/or inefficient. For example, some techniques require applications to respond to inquiries about their content directly. This disclosure provides more effective and/or efficient techniques for resolving queries using examples of a digital assistant that is responding to verbal inquiries. It should be recognized that other types of services other than a digital assistant can be used with techniques described herein. For example, a search service and/or different user applications can use techniques described herein. In addition, techniques optionally complement or replace other techniques for resolving queries.

Some techniques are described herein for annotating actions taken and/or entities currently displayed by different applications so that services can respond to inquiries requiring context of the actions and/or the entities. For example, a context service can receive communications from different applications indicating information related to their operation. After, the context service can provide the information to services attempting to perform operations that require a current context. Other techniques are described herein for selectively obtaining displayed entities from a context service when inquiries require additional context. For example, a digital assistant can receive a verbal request to perform an operation on something currently displayed. In cases where the operation and/or what item that is currently displayed corresponds to the verbal request, the digital assistant can obtain information from a context service so as to resolve the verbal request.

In some embodiments, a method that is performed at a computer system that is executing a first service is described. In some embodiments, the method comprises: receiving a request to perform an operation; in response to receiving the request to perform the operation: in accordance with a determination that the request includes a reference applicable to a plurality of entities, sending, to a second service different from the first service, a request for a list of entities currently displayed by the computer system; and in accordance with a determination that the request does not include a reference applicable to a plurality of entities, performing the operation without sending, to the second service, the request for a list of entities currently displayed by the computer system; after sending the request for a list of entities currently displayed by the computer system, receiving, from the second service, a first list of one or more entities currently displayed by the computer system; and in response to receiving the first list of one or more entities currently displayed by the computer system, performing the operation based on the first list of one or more entities currently displayed by the computer system.

In some embodiments, a non-transitory computer-readable storage medium storing one or more programs configured to be executed by one or more processors of a computer system that is executing a first service is described. In some embodiments, the one or more programs includes instructions for: receiving a request to perform an operation; in response to receiving the request to perform the operation: in accordance with a determination that the request includes a reference applicable to a plurality of entities, sending, to a second service different from the first service, a request for a list of entities currently displayed by the computer system; and in accordance with a determination that the request does not include a reference applicable to a plurality of entities, performing the operation without sending, to the second service, the request for a list of entities currently displayed by the computer system; after sending the request for a list of entities currently displayed by the computer system, receiving, from the second service, a first list of one or more entities currently displayed by the computer system; and in response to receiving the first list of one or more entities currently displayed by the computer system, performing the operation based on the first list of one or more entities currently displayed by the computer system.

In some embodiments, a transitory computer-readable storage medium storing one or more programs configured to be executed by one or more processors of a computer system that is executing a first service is described. In some embodiments, the one or more programs includes instructions for: receiving a request to perform an operation; in response to receiving the request to perform the operation: in accordance with a determination that the request includes a reference applicable to a plurality of entities, sending, to a second service different from the first service, a request for a list of entities currently displayed by the computer system; and in accordance with a determination that the request does not include a reference applicable to a plurality of entities, performing the operation without sending, to the second service, the request for a list of entities currently displayed by the computer system; after sending the request for a list of entities currently displayed by the computer system, receiving, from the second service, a first list of one or more entities currently displayed by the computer system; and in response to receiving the first list of one or more entities currently displayed by the computer system, performing the operation based on the first list of one or more entities currently displayed by the computer system.

In some embodiments, a computer system that is executing a first service is described. In some embodiments, the computer system comprises one or more processors and memory storing one or more programs configured to be executed by the one or more processors. In some embodiments, the one or more programs includes instructions for: receiving a request to perform an operation; in response to receiving the request to perform the operation: in accordance with a determination that the request includes a reference applicable to a plurality of entities, sending, to a second service different from the first service, a request for a list of entities currently displayed by the computer system; and in accordance with a determination that the request does not include a reference applicable to a plurality of entities, performing the operation without sending, to the second service, the request for a list of entities currently displayed by the computer system; after sending the request for a list of entities currently displayed by the computer system, receiving, from the second service, a first list of one or more entities currently displayed by the computer system; and in response to receiving the first list of one or more entities currently displayed by the computer system, performing the operation based on the first list of one or more entities currently displayed by the computer system.

In some embodiments, a computer system that is executing a first service is described. In some embodiments, the computer system comprises means for performing each of the following steps: receiving a request to perform an operation; in response to receiving the request to perform the operation: in accordance with a determination that the request includes a reference applicable to a plurality of entities, sending, to a second service different from the first service, a request for a list of entities currently displayed by the computer system; and in accordance with a determination that the request does not include a reference applicable to a plurality of entities, performing the operation without sending, to the second service, the request for a list of entities currently displayed by the computer system; after sending the request for a list of entities currently displayed by the computer system, receiving, from the second service, a first list of one or more entities currently displayed by the computer system; and in response to receiving the first list of one or more entities currently displayed by the computer system, performing the operation based on the first list of one or more entities currently displayed by the computer system.

In some embodiments, a computer program product is described. In some embodiments, the computer program product comprises one or more programs configured to be executed by one or more processors of a computer system that is executing a first service. In some embodiments, the one or more programs include instructions for: receiving a request to perform an operation; in response to receiving the request to perform the operation: in accordance with a determination that the request includes a reference applicable to a plurality of entities, sending, to a second service different from the first service, a request for a list of entities currently displayed by the computer system; and in accordance with a determination that the request does not include a reference applicable to a plurality of entities, performing the operation without sending, to the second service, the request for a list of entities currently displayed by the computer system; after sending the request for a list of entities currently displayed by the computer system, receiving, from the second service, a first list of one or more entities currently displayed by the computer system; and in response to receiving the first list of one or more entities currently displayed by the computer system, performing the operation based on the first list of one or more entities currently displayed by the computer system.

In some embodiments, a method that is performed at a computer system that is executing a first process is described. In some embodiments, the method comprises: receiving, from a second process different from the first process, a request to store an annotation of a first user interface object that is currently being displayed by the computer system; after receiving the request to store an annotation of the first user interface object, receiving, from a third process different from the second process and the first process, a request for a list of entities currently displayed by the computer system; and in response to receiving the request for a list of entities currently displayed by the computer system: in accordance with a determination that the request for a list of entities currently displayed by the computer system corresponds to the first user interface object, providing, to the third process, a first list of one or more entities currently displayed by the computer system, wherein the first list includes an identification of the first user interface object; and in accordance with a determination that the request for a list of entities currently displayed by the computer system does not correspond to the first user interface object, forgoing provision of, to the third process, the first list of one or more entities currently displayed by the computer system.

In some embodiments, a non-transitory computer-readable storage medium storing one or more programs configured to be executed by one or more processors of a computer system that is executing a first process is described. In some embodiments, the one or more programs includes instructions for: receiving, from a second process different from the first process, a request to store an annotation of a first user interface object that is currently being displayed by the computer system; after receiving the request to store an annotation of the first user interface object, receiving, from a third process different from the second process and the first process, a request for a list of entities currently displayed by the computer system; and in response to receiving the request for a list of entities currently displayed by the computer system: in accordance with a determination that the request for a list of entities currently displayed by the computer system corresponds to the first user interface object, providing, to the third process, a first list of one or more entities currently displayed by the computer system, wherein the first list includes an identification of the first user interface object; and in accordance with a determination that the request for a list of entities currently displayed by the computer system does not correspond to the first user interface object, forgoing provision of, to the third process, the first list of one or more entities currently displayed by the computer system.

In some embodiments, a transitory computer-readable storage medium storing one or more programs configured to be executed by one or more processors of a computer system that is executing a first process is described. In some embodiments, the one or more programs includes instructions for: receiving, from a second process different from the first process, a request to store an annotation of a first user interface object that is currently being displayed by the computer system; after receiving the request to store an annotation of the first user interface object, receiving, from a third process different from the second process and the first process, a request for a list of entities currently displayed by the computer system; and in response to receiving the request for a list of entities currently displayed by the computer system: in accordance with a determination that the request for a list of entities currently displayed by the computer system corresponds to the first user interface object, providing, to the third process, a first list of one or more entities currently displayed by the computer system, wherein the first list includes an identification of the first user interface object; and in accordance with a determination that the request for a list of entities currently displayed by the computer system does not correspond to the first user interface object, forgoing provision of, to the third process, the first list of one or more entities currently displayed by the computer system.

In some embodiments, a computer system that is executing a first process is described. In some embodiments, the computer system comprises one or more processors and memory storing one or more programs configured to be executed by the one or more processors. In some embodiments, the one or more programs includes instructions for: receiving, from a second process different from the first process, a request to store an annotation of a first user interface object that is currently being displayed by the computer system; after receiving the request to store an annotation of the first user interface object, receiving, from a third process different from the second process and the first process, a request for a list of entities currently displayed by the computer system; and in response to receiving the request for a list of entities currently displayed by the computer system: in accordance with a determination that the request for a list of entities currently displayed by the computer system corresponds to the first user interface object, providing, to the third process, a first list of one or more entities currently displayed by the computer system, wherein the first list includes an identification of the first user interface object; and in accordance with a determination that the request for a list of entities currently displayed by the computer system does not correspond to the first user interface object, forgoing provision of, to the third process, the first list of one or more entities currently displayed by the computer system.

In some embodiments, a computer system that is executing a first process is described. In some embodiments, the computer system comprises means for performing each of the following steps: receiving, from a second process different from the first process, a request to store an annotation of a first user interface object that is currently being displayed by the computer system; after receiving the request to store an annotation of the first user interface object, receiving, from a third process different from the second process and the first process, a request for a list of entities currently displayed by the computer system; and in response to receiving the request for a list of entities currently displayed by the computer system: in accordance with a determination that the request for a list of entities currently displayed by the computer system corresponds to the first user interface object, providing, to the third process, a first list of one or more entities currently displayed by the computer system, wherein the first list includes an identification of the first user interface object; and in accordance with a determination that the request for a list of entities currently displayed by the computer system does not correspond to the first user interface object, forgoing provision of, to the third process, the first list of one or more entities currently displayed by the computer system.

In some embodiments, a computer program product is described. In some embodiments, the computer program product comprises one or more programs configured to be executed by one or more processors of a computer system that is executing a first process. In some embodiments, the one or more programs include instructions for: receiving, from a second process different from the first process, a request to store an annotation of a first user interface object that is currently being displayed by the computer system; after receiving the request to store an annotation of the first user interface object, receiving, from a third process different from the second process and the first process, a request for a list of entities currently displayed by the computer system; and in response to receiving the request for a list of entities currently displayed by the computer system: in accordance with a determination that the request for a list of entities currently displayed by the computer system corresponds to the first user interface object, providing, to the third process, a first list of one or more entities currently displayed by the computer system, wherein the first list includes an identification of the first user interface object; and in accordance with a determination that the request for a list of entities currently displayed by the computer system does not correspond to the first user interface object, forgoing provision of, to the third process, the first list of one or more entities currently displayed by the computer system.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

### DESCRIPTION OF THE FIGURES

For a better understanding of the various described embodiments, reference should be made to the Detailed Description below, in conjunction with the following drawings in which like reference numerals refer to corresponding parts throughout the figures.
FIG. 1A is a block diagram illustrating a compute system in accordance with some embodiments.
FIG. 1B is a flow diagram illustrating a process for an application in accordance with some embodiments.
FIG. 1C is a flow diagram illustrating another process for an application in accordance with some embodiments.
FIG. 1D is a block diagram illustrating a device in accordance with some embodiments.
FIG. 2 is a block diagram illustrating a device with interconnected subsystems in accordance with some embodiments.
FIG. 3 is a block diagram illustrating interactions between components on a device in accordance with some embodiments.
FIG. 4 is a flow diagram illustrating a process for responding to queries in accordance with some embodiments.
FIG. 5 is a flow diagram illustrating a process for annotating objects in accordance with some embodiments.

### DETAILED DESCRIPTION

The following description sets forth exemplary processes, parameters, and the like. It should be recognized, however, that such description is not intended as a limitation on the scope of the present disclosure but is instead provided as a description of exemplary embodiments.

Processes described herein can include one or more steps that are contingent upon one or more conditions being satisfied. It should be understood that a process can occur over multiple iterations of the same process with different steps of the process being satisfied in different iterations. For example, if a process requires performing a first step upon a determination that a set of one or more criteria is met and a second step upon a determination that the set of one or more criteria is not met, a person of ordinary skill in the art would appreciate that the steps of the process are repeated until both conditions, in no particular order, are satisfied. Thus, a process described with steps that are contingent upon a condition being satisfied can be rewritten as a process that is repeated until each of the conditions described in the process are satisfied. This, however, is not required of system or computer readable medium claims where the system or computer readable medium claims include instructions for performing one or more steps that are contingent upon one or more conditions being satisfied. Because the instructions for the system or computer readable medium claims are stored in one or more processors and/or at one or more memory locations, the system or computer readable medium claims include logic that can determine whether the one or more conditions have been satisfied without explicitly repeating steps of a process until all of the conditions upon which steps in the process are contingent have been satisfied. A person having ordinary skill in the art would also understand that, similar to a process with contingent steps, a system or computer readable storage medium can repeat the steps of a process as many times as needed to ensure that all of the contingent steps have been performed.

Although the following description uses terms "first," "second," etc. to describe various elements, these elements should not be limited by the terms. In some embodiments, these terms are used to distinguish one element from another. For example, a first subsystem could be termed a second subsystem, and, similarly, a second subsystem device or a subsystem device could be termed a first subsystem device, without departing from the scope of the various described embodiments. In some embodiments, the first subsystem and the second subsystem are two separate references to the same subsystem. In some embodiments, the first subsystem and the second subsystem are both subsystems, but they are not the same subsystem or the same type of subsystem.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when," "upon," "in response to determining," "in response to detecting," or "in accordance with a determination that" depending on the context. Similarly, the phrase "if it is determined" or "if [a stated condition or event] is detected" is, optionally, construed to mean "upon determining," "in response to determining," "upon detecting [the stated condition or event]," "in response to detecting [the stated condition or event]," or "in accordance with a determination that [the stated condition or event]" depending on the context.

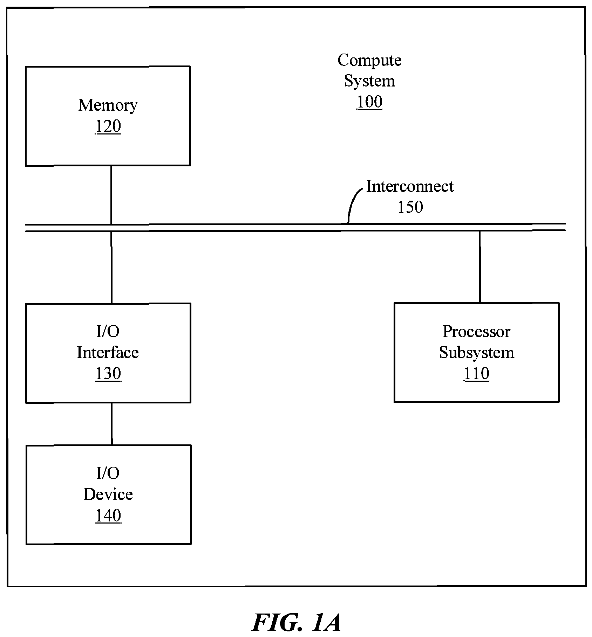

Turning to FIG. 1A, a block diagram of compute system 100 is illustrated. Compute system 100 is a non-limiting example of a compute system that can be used to perform functionality described herein. It should be recognized that other computer architectures of a compute system can be used to perform functionality described herein.

In the illustrated example, compute system 100 includes processor subsystem 110 communicating with (e.g., wired or wirelessly) memory 120 (e.g., a system memory) and I/O interface 130 via interconnect 150 (e.g., a system bus, one or more memory locations, or other communication channel for connecting multiple components of compute system 100). In addition, I/O interface 130 is communicating with (e.g., wired or wirelessly) to I/O device 140. In some embodiments, I/O interface 130 is included with I/O device 140 such that the two are a single component. It should be recognized that there can be one or more I/O interfaces, with each I/O interface communicating with one or more I/O devices. In some embodiments, multiple instances of processor subsystem 110 can be communicating via interconnect 150.

Compute system 100 can be any of various types of devices, including, but not limited to, a system on a chip, a server system, a personal computer system (e.g., a smartphone, a smartwatch, a wearable device, a tablet, a laptop computer, and/or a desktop computer), a sensor, or the like. In some embodiments, compute system 100 is included or communicating with a physical component for the purpose of modifying the physical component in response to an instruction. In some embodiments, compute system 100 receives an instruction to modify a physical component and, in response to the instruction, causes the physical component to be modified. In some embodiments, the physical component is modified via an actuator, an electric signal, and/or algorithm. Examples of such physical components include an acceleration control, a break, a gear box, a hinge, a motor, a pump, a refrigeration system, a spring, a suspension system, a steering control, a pump, a vacuum system, and/or a valve. In some embodiments, a sensor includes one or more hardware components that detect information about a physical environment in proximity to (e.g., surrounding) the sensor. In some embodiments, a hardware component of a sensor includes a sensing component (e.g., an image sensor or temperature sensor), a transmitting component (e.g., a laser or radio transmitter), a receiving component (e.g., a laser or radio receiver), or any combination thereof. Examples of sensors include an angle sensor, a chemical sensor, a brake pressure sensor, a contact sensor, a non-contact sensor, an electrical sensor, a flow sensor, a force sensor, a gas sensor, a humidity sensor, an image sensor (e.g., a camera sensor, a radar sensor, and/or a LiDAR sensor), an inertial measurement unit, a leak sensor, a level sensor, a light detection and ranging system, a metal sensor, a motion sensor, a particle sensor, a photoelectric sensor, a position sensor (e.g., a global positioning system), a precipitation sensor, a pressure sensor, a proximity sensor, a radio detection and ranging system, a radiation sensor, a speed sensor (e.g., measures the speed of an object), a temperature sensor, a time-of-flight sensor, a torque sensor, and an ultrasonic sensor. In some embodiments, a sensor includes a combination of multiple sensors. In some embodiments, sensor data is captured by fusing data from one sensor with data from one or more other sensors. Although a single compute system is shown in FIG. 1A, compute system 100 can also be implemented as two or more compute systems operating together.

In some embodiments, processor subsystem 110 includes one or more processors or processing units configured to execute program instructions to perform functionality described herein. For example, processor subsystem 110 can execute an operating system, a middleware system, one or more applications, or any combination thereof.

In some embodiments, the operating system manages resources of compute system 100. Examples of types of operating systems covered herein include batch operating systems (e.g., Multiple Virtual Storage (MVS)), time-sharing operating systems (e.g., Unix), distributed operating systems (e.g., Advanced Interactive eXecutive (AIX), network operating systems (e.g., Microsoft Windows Server), and real-time operating systems (e.g., QNX). In some embodiments, the operating system includes various procedures, sets of instructions, software components, and/or drivers for controlling and managing general system tasks (e.g., memory management, storage device control, power management, or the like) and for facilitating communication between various hardware and software components. In some embodiments, the operating system uses a priority-based scheduler that assigns a priority to different tasks that processor subsystem 110 can execute. In such examples, the priority assigned to a task is used to identify a next task to execute. In some embodiments, the priority-based scheduler identifies a next task to execute when a previous task finishes executing. In some embodiments, the highest priority task runs to completion unless another higher priority task is made ready.

In some embodiments, the middleware system provides one or more services and/or capabilities to applications (e.g., the one or more applications running on processor subsystem 110) outside of what the operating system offers (e.g., data management, application services, messaging, authentication, API management, or the like). In some embodiments, the middleware system is designed for a heterogeneous computer cluster to provide hardware abstraction, low-level device control, implementation of commonly used functionality, message-passing between processes, package management, or any combination thereof. Examples of middleware systems include Lightweight Communications and Marshalling (LCM), PX4, Robot Operating System (ROS), and ZeroMQ. In some embodiments, the middleware system represents processes and/or operations using a graph architecture, where processing takes place in nodes that can receive, post, and multiplex sensor data messages, control messages, state messages, planning messages, actuator messages, and other messages. In such examples, the graph architecture can define an application (e.g., an application executing on processor subsystem 110 as described above) such that different operations of the application are included with different nodes in the graph architecture.

In some embodiments, a message sent from a first node in a graph architecture to a second node in the graph architecture is performed using a publish-subscribe model, where the first node publishes data on a channel in which the second node can subscribe. In such examples, the first node can store data in memory (e.g., memory 120 or some local memory of processor subsystem 110) and notify the second node that the data has been stored in the memory. In some embodiments, the first node notifies the second node that the data has been stored in the memory by sending a pointer (e.g., a memory pointer, such as an identification of a memory location) to the second node so that the second node can access the data from where the first node stored the data. In some embodiments, the first node would send the data directly to the second node so that the second node would not need to access a memory based on data received from the first node.

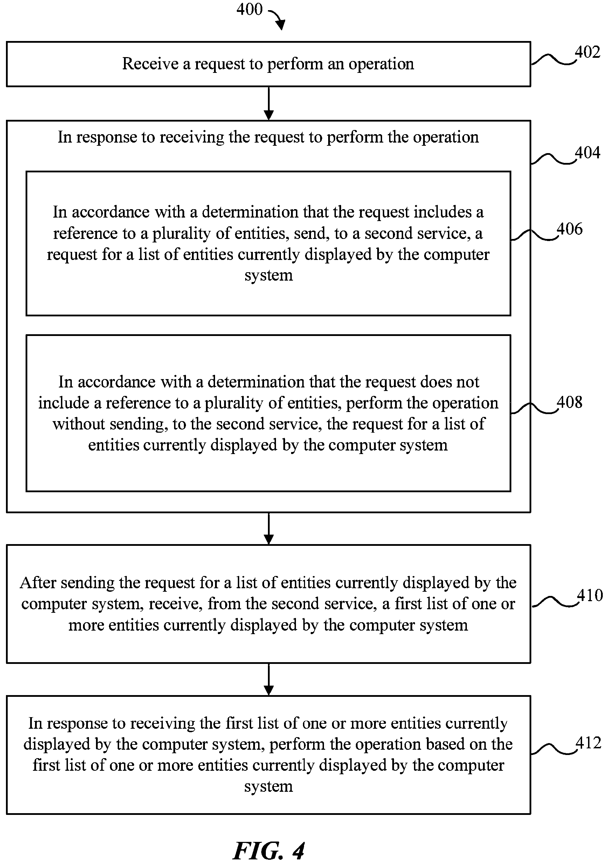

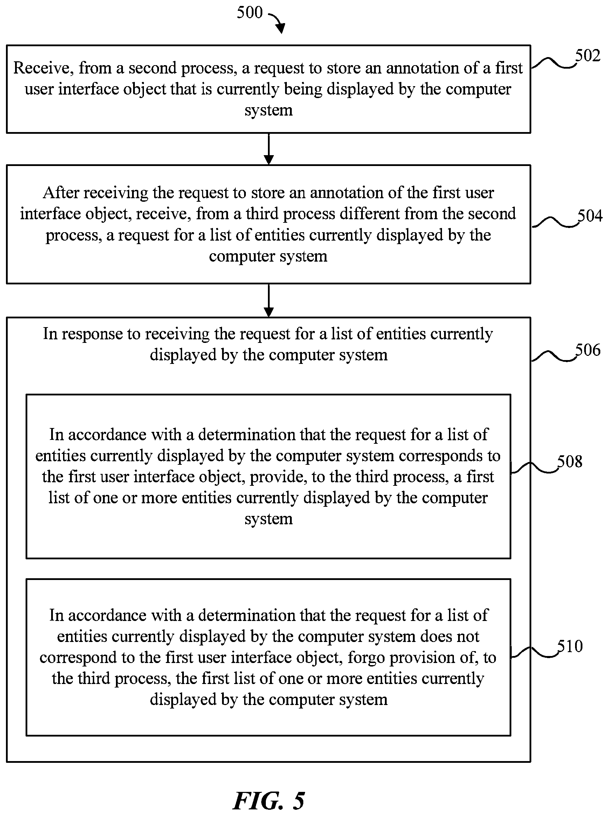

Memory 120 can include a computer readable medium (e.g., non-transitory or transitory computer readable medium) usable to store (e.g., configured to store, assigned to store, and/or that stores) program instructions executable by processor subsystem 110 to cause compute system 100 to perform various operations described herein. For example, memory 120 can store program instructions to implement the functionality associated with processes 400 and 500 (FIGS. 4 and 5) described below.

Memory 120 can be implemented using different physical, non-transitory memory media, such as hard disk storage, floppy disk storage, removable disk storage, flash memory, random access memory (RAM-SRAM, EDO RAM, SDRAM, DDR SDRAM, RAMBUS RAM, or the like), read only memory (PROM, EEPROM, or the like), or the like. Memory in compute system 100 is not limited to primary storage such as memory 120. Compute system 100 can also include other forms of storage such as cache memory in processor subsystem 110 and secondary storage on I/O device 140 (e.g., a hard drive, storage array, etc.). In some embodiments, these other forms of storage can also store program instructions executable by processor subsystem 110 to perform operations described herein. In some embodiments, processor subsystem 110 (or each processor within processor subsystem 110) contains a cache or other form of on-board memory.

I/O interface 130 can be any of various types of interfaces configured to communicate with other devices. In some embodiments, I/O interface 130 includes a bridge chip (e.g., Southbridge) from a front-side bus to one or more back-side buses. I/O interface 130 can communicate with one or more I/O devices (e.g., I/O device 140) via one or more corresponding buses or other interfaces. Examples of I/O devices include storage devices (hard drive, optical drive, removable flash drive, storage array, SAN, or their associated controller), network interface devices (e.g., to a local or wide-area network), sensor devices (e.g., camera, radar, LiDAR, ultrasonic sensor, GPS, inertial measurement device, or the like), and auditory or visual output devices (e.g., speaker, light, screen, projector, or the like). In some embodiments, compute system 100 is communicating with a network via a network interface device (e.g., configured to communicate over Wi-Fi, Bluetooth, Ethernet, or the like). In some embodiments, compute system 100 is directly or wired to the network.

Implementations within the scope of the present disclosure can be partially or entirely realized using a tangible computer-readable storage medium (or multiple tangible computer-readable storage media of one or more types) encoding one or more computer-readable instructions. It should be recognized that computer-executable instructions can be organized in any format, including applications, widgets, processes, software, and/or components.

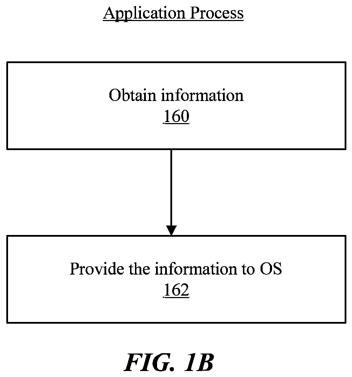

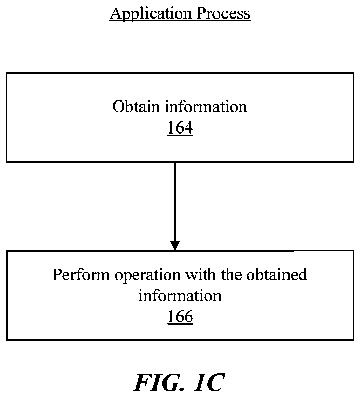

Implementations within the scope of the present disclosure include a computer-readable storage medium that encodes instructions organized as an application (e.g., application 170) that, when executed by one or more processing units, control an electronic device (e.g., device 168) to perform the process of FIG. 1B, the process of FIG. 1C, and/or one or more other processes and/or processes described herein.

It should be recognized that application 170 can be any suitable type of application, including, for example, one or more of: a messaging application, a maps application, a fitness application, a health application, a digital payments application, a media application, and/or a social network application. In some embodiments, application 170 is an application that is pre-installed on device 168 at purchase (e.g., a first party application). In other embodiments, application 170 is an application that is provided to device 168 via an operating system update file (e.g., a first party application or a second party application). In other embodiments, application 170 is an application that is provided via an application store. In some embodiments, the application store can be an application store that is pre-installed on device 168 at purchase (e.g., a first party application store). In other embodiments, the application store is a third-party application store (e.g., an application store that is provided by another application store, downloaded via a network, and/or read from a storage device).

Referring to FIG. 1B, application 170 obtains information (e.g., 160). In some embodiments, the information obtained at 160 includes positional information, time information, notification information, user information, environment information, electronic device state information, weather information, media information, historical information, event information, hardware information, and/or motion information. In some embodiments, in response to and/or after obtaining the information at 160, application 170 provides the information to operating system (e.g., 162).

Referring to FIG. 1C, application 170 obtains information (e.g., 164). In some embodiments, the information obtained at 164 includes positional information, time information, notification information, user information, environment information electronic device state information, weather information, media information, historical information, event information, hardware information and/or motion information. in response to and/or after obtaining the information at 164, application 170 performs an operation with the information (e.g., 166). In some embodiments, the operation performed at 166 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of operating system 180 based on the information.

In some embodiments, one or more steps of the process of FIG. 1B and/or the process of FIG. 1C is performed in response to a trigger. In some embodiments, the trigger includes detection of an event, a notification received from operating system 180, a user input, and/or a response to a call to an API provided by operating system 180.

In some embodiments, the instructions of application 170, when executed, control device 168 to perform the process of FIG. 1B and/or the process of FIG. 1C by calling an application programming interface (API) (e.g., API 176) provided by operating system 180. In some embodiments, application 170 performs at least a portion of the process of FIG. 1B and/or the process of FIG. 1C without calling API 176.

In some embodiments, one or more steps of the process of FIG. 1B and/or the process of FIG. 1C includes calling an API (e.g., API 176) using one or more parameters defined by the API. In some embodiments, the one or more parameters include a constant, a key, a data structure, an object, an object class, a variable, a data type, a pointer, an array, a list or a pointer to a function or a process, and/or another way to reference a data or other item to be passed via the API.

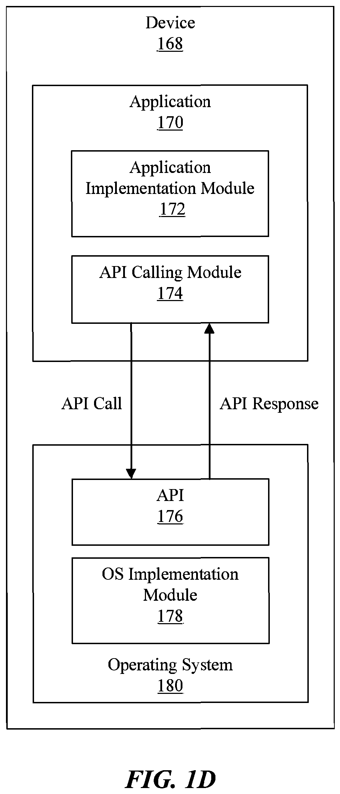

Referring to FIG. 1D, device 168 is illustrated. In some embodiments, device 168 is a personal computing device, a smart phone, a smart watch, a fitness tracker, a head mounted display (HMD) device, a media device, a communal device, a speaker, a television, and/or a tablet. As illustrated in FIG. 1D, device 168 includes application 170 and operating system 180. Application 170 includes application implementation module 172 and API calling module 174. Operating system 180 includes API 176 and OS implementation module 178. It should be recognized that device 168, application 170, and/or operating system 180 can include more, fewer, and/or different components than illustrated in FIG. 1D.

In some embodiments, application implementation module 172 includes a set of one or more instructions corresponding to one or more operations performed by application 170. For example, when application 170 is a messaging application, application implementation module 172 can include operations to receive and send messages. In some embodiments, application implementation module 172 communicates with API calling module to communicate with operating system 180 via API 176.

In some embodiments, API 176 is a software module (e.g., a collection of computer-readable instructions) that provides an interface that allows a different module (e.g., API calling module 174) to access and/or use one or more functions, processes, procedures, data structures, classes, and/or other services provided by OS implementation module 178 of operating system 180. For example, API calling module 174 can access a feature of OS implementation module 178 through one or more API calls or invocations (e.g., embodied by a function or a process call) exposed by API 176 and can pass data and/or control information using one or more parameters via the API calls or invocations. In some embodiments, API 176 allows application 170 to use a service provided by a Software Development Kit (SDK) library. In other embodiments, application 170 incorporates a call to a function or process provided by the SDK library and provided by API 176 or uses data types or objects defined in the SDK library and provided by API 176. In some embodiments, API calling module 174 makes an API call via API 176 to access and use a feature of OS implementation module 178 that is specified by API 176. In such embodiments, OS implementation module 178 can return a value via API 176 to API calling module 174 in response to the API call. The value can report to application 170 the capabilities or state of a hardware component of device 168, including those related to aspects such as input capabilities and state, output capabilities and state, processing capability, power state, storage capacity and state, and/or communications capability. In some embodiments, API 176 is implemented in part by firmware, microcode, or other low level logic that executes in part on the hardware component.

In some embodiments, API 176 allows a developer of API calling module 174 (which can be a third-party developer) to leverage a feature provided by OS implementation module 178. In such embodiments, there can be one or more API calling modules (e.g., including API calling module 174) that communicate with OS implementation module 178. In some embodiments, API 176 allows multiple API calling modules written in different programming languages to communicate with OS implementation module 178 (e.g., API 176 can include features for translating calls and returns between OS implementation module 178 and API calling module 174) while API 176 is implemented in terms of a specific programming language. In some embodiments, API calling module 174 calls APIs from different providers such as a set of APIs from an OS provider, another set of APIs from a plug-in provider, and/or another set of APIs from another provider (e.g., the provider of a software library) or creator of the another set of APIs.

Examples of API 176 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a bluetooth API, an NFC API, a UWB API, a fitness API, a smart home API, contact transfer API, photos API, camera API, and/or image processing API. In some embodiments the sensor API is an API for accessing data associated with a sensor of device 168. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor and/or biometric sensor.

In some embodiments, OS implementation module 178 is an operating system software module (e.g., a collection of computer-readable instructions) that is constructed to perform an operation in response to receiving an API call via API 176. In some embodiments, OS implementation module 178 is constructed to provide an API response (via API 176) as a result of processing an API call. By way of example, OS implementation module 178 and API calling module 180 can each be any one of an operating system, a library, a device driver, an API, an application program, or other module. It should be understood that OS implementation module 178 and API calling module 174 can be the same or different type of module from each other. In some embodiments, OS implementation module 178 is embodied at least in part in firmware, microcode, or other hardware logic.

In some embodiments, OS implementation module 178 returns a value through API 176 in response to an API call from API calling module 174. While API 176 defines the syntax and result of an API call (e.g., how to invoke the API call and what the API call does), API 176 might not reveal how OS implementation module 178 accomplishes the function specified by the API call. Various API calls are transferred via the one or more application programming interfaces between API calling module 174 and OS implementation module 178. Transferring the API calls can include issuing, initiating, invoking, calling, receiving, returning, and/or responding to the function calls or messages. In other words, transferring can describe actions by either of API calling module 174 or OS implementation module 178. In some embodiments, a function call or other invocation of API 176 sends and/or receives one or more parameters through a parameter list or other structure.

In some embodiments, OS implementation module 178 provides more than one API, each providing a different view of or with different aspects of functionality implemented by OS implementation module 178. For example, one API of OS implementation module 178 can provide a first set of functions and can be exposed to third party developers, and another API of OS implementation module 178 can be hidden (e.g., not exposed) and provide a subset of the first set of functions and also provide another set of functions, such as testing or debugging functions which are not in the first set of functions. In some embodiments, OS implementation module 178 calls one or more other components via an underlying API and thus be both an API calling module and an OS implementation module. It should be recognized that OS implementation module 178 can include additional functions, processes, classes, data structures, and/or other features that are not specified through API 176 and are not available to API calling module 174. It should also be recognized that API calling module 174 can be on the same system as OS implementation module 178 or can be located remotely and access OS implementation module 178 using API 176 over a network. In some embodiments, OS implementation module 178, API 176, and/or API calling module 174 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

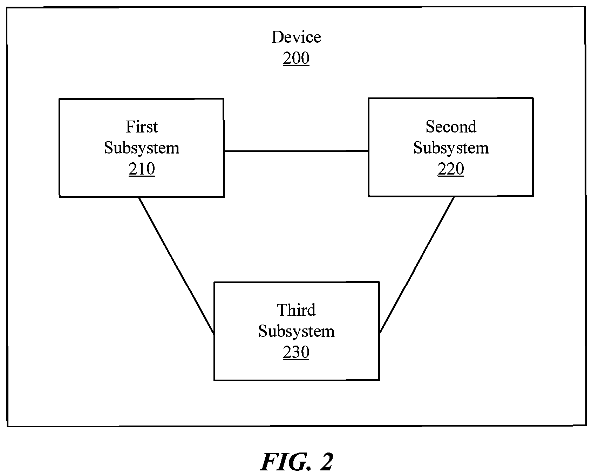

FIG. 2 illustrates a block diagram of device 200 with interconnected subsystems. In the illustrated example, device 200 includes three different subsystems (i.e., first subsystem 210, second subsystem 220, and third subsystem 230) communicating with (e.g., wired or wirelessly) each other, creating a network (e.g., a personal area network, a local area network, a wireless local area network, a metropolitan area network, a wide area network, a storage area network, a virtual private network, an enterprise internal private network, a campus area network, a system area network, and/or a controller area network). An example of a possible computer architecture of a subsystem as included in FIG. 2 is described in FIG. 1A (i.e., compute system 100). Although three subsystems are shown in FIG. 2, device 200 can include more or fewer subsystems.

In some embodiments, some subsystems are not connected to other subsystem (e.g., first subsystem 210 can be connected to second subsystem 220 and third subsystem 230 but second subsystem 220 cannot be connected to third subsystem 230). In some embodiments, some subsystems are connected via one or more wires while other subsystems are wirelessly connected. In some embodiments, messages are set between the first subsystem 210, second subsystem 220, and third subsystem 230, such that when a respective subsystem sends a message the other subsystems receive the message (e.g., via a wire and/or a bus). In some embodiments, one or more subsystems are wirelessly connected to one or more compute systems outside of device 200, such as a server system. In such examples, the subsystem can be configured to communicate wirelessly to the one or more compute systems outside of device 200.

In some embodiments, device 200 includes a housing that fully or partially encloses subsystems 210-230. Examples of device 200 include a home-appliance device (e.g., a refrigerator or an air conditioning system), a robot (e.g., a robotic arm or a robotic vacuum), and a vehicle. In some embodiments, device 200 is configured to navigate (with or without user input) in a physical environment.

In some embodiments, one or more subsystems of device 200 are used to control, manage, and/or receive data from one or more other subsystems of device 200 and/or one or more compute systems remote from device 200. For example, first subsystem 210 and second subsystem 220 can each be a camera that captures images, and third subsystem 230 can use the captured images for decision making. In some embodiments, at least a portion of device 200 functions as a distributed compute system. For example, a task can be split into different portions, where a first portion is executed by first subsystem 210 and a second portion is executed by second subsystem 220.

Attention is now directed towards techniques for resolving queries. Such techniques are described in the context of a digital assistant responding to verbal requests. It should be recognized that other types of services and/or requests can be used with techniques described herein. For example, a search query entered into a text entry field can use techniques described herein. In addition, techniques optionally complement or replace other techniques for resolving queries.

Some techniques described herein allow developers of applications to associate objects that represent user concepts of their applications (e.g., photos of a photo applications, songs of a media application, and/or web pages of a web browser) with a view being displayed (e.g., a user interface and/or a portion of a user interface) so that processes separate from the applications can resolve information about the objects in the view. Such techniques allow resolution of ambiguous requests that require context to identify an intent of a request.

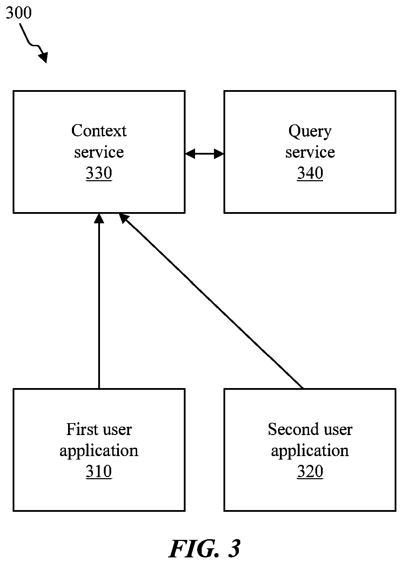

FIG. 3 is a block diagram illustrating interactions between components on a device in accordance with some embodiments. The interactions in these figures are used to illustrate the processes described below, including the processes in FIGS. 4-5.

FIG. 3 illustrates device 300 including multiple user applications (e.g., first user application 310 and second user application 320). The user applications can each perform different operations, such as outputting content, responding to user input, and/or communicating with different processes (e.g., on device 300 and/or on other devices separate from device 300). Examples of user applications include a home application, a note-taking application, a word-processing application, a document-processing application, a presentation application, an email application, a form processing application such as for PDF viewer and/or editor, a game, a messaging application, a maps application, a fitness application, a health application, a digital payments application, a media application, and/or a social network application. In some embodiments, the multiple user applications communicate with each other directly and/or via an operating system of device 300.

FIG. 3 further illustrates device 300 including multiple services (e.g., context service 330 and query service 340). The services can each perform operations on behalf of a user, an application, and/or a remote device. Examples of services include digital assistant services, search services, storage services, communication services, translation services, and transcription services. For example, a digital assistant service can communicate locally and/or remotely to respond to user inquiries. This description uses two particular services as examples for explanation purposes. Context service 330 is used as a service to receive information from one or more different user applications (e.g., via one or more APIs) and communicate with other services (e.g., via one or more APIs) to provide a subset of the information when requested. Query service 340 is used as a service to receive user inquiries and, if additional context is required, communicate with context service 330 to obtain such context. It should be recognized that services can be applications processes and/or system processes. It should also be recognized that other types of services, other applications, and/or other processes can be used with techniques described herein. It should also be recognized that different components of device 300 can perform different operations than described herein. For example, a user application can perform operations of context service 330 such that the user application responds to requests by a service.

In some embodiments, a user application (e.g., first user application 310 or second user application 310) annotates content managed and/or stored by the user application to send to context service 330. For example, the user application can store data objects that have one or more properties. In such an example, the user application can provide, to context service 330 for storage, an identification of a data object, an identification of a type of the data object, and/or one or more properties of the data object. In one example, a data object is an email message with a first property as a subject line of the email message and a second property as an email body of the email message. By providing an identification of the data object with the one or more properties to context service 330, query service 340 can obtain the one or more properties using context service 330 to resolve how to respond to a user inquiry about email messages.

In some embodiments, the user application annotates content output by the user application to send to context service 330. For example, the user application can display two separate notes, one on a left side of a field-of-view and another on a right side of the field-of-view. In such an example, the user application can provide, to context service 330 for storage, an identification of each note with a property that indicates a location of the note. By providing an identification of each note with where they are located to context service 330, query service 340 can obtain such information to determine which note that a user is looking at when their gaze is to left side of the field-of-view and requesting to make "it" bigger. In particular, query service 340 can identify the left note on the left side of the field-of-view using one or more of the properties provided to context service 330 by the user application.

In some embodiments, the user application annotates operations performed by the user application to send to context service 330. For example, the user application can bold text in a text entry field. In such an example, the user application can provide, to context service 330 for storage, an identification of the text entry field, an identification of a type of object (e.g., a text entry field), and/or a property that a portion of the text entry field has been bolded. By providing an identification of the text entry field with the property that the portion of the text entry field has been bolded to context service 330, query service 340 can obtain such information to determine that a most-recent operation performed was bolding text so that query service 340 can respond to an inquiry requesting to perform a most-recent operation again on different text entry fields currently being displayed. Such a response might also require query service 340 to obtain information from context service 330 about what other text entry fields are currently displayed.

While the above description primarily covers examples from single applications regarding current states or most recent states, it should be recognized that techniques described herein can be used with information from multiple applications and/or from different time periods. For example, context service 330 can filter information provided to services based on requests from the services such that not every request requires context service 330 to provide all information stored by context service 330. Such filters can be based on types of entities, particular user interfaces, portions of an environment and/or a user interface, and/or an amount of time in the past. For another example, context service 330 can store information received from one or more user applications (e.g., as a transcript of objects, operations, and/or what is currently displayed) in a storage location that different services can access. In such an example, context service 330 can provide identifications of locations within the storage location to different services so that the services can query the portions themselves based on their needs. In some embodiments, user applications have to grant services permission to view their data before such data is accessible to the services. Such permission can include varying amounts of permission including length of time, amount of detail, and/or number of requests.

It should also be recognized that services do not have to communicate with context service 330 and/or a storage location corresponding to context service 330 to respond to every inquiry. For example, some inquiries received by query service 340 can be unambiguous and not require query service 340 to obtain context to respond. In such an example, query service 340 can respond without communicating with context service 330. Inquiries that do require communicating with context service 330 are sometimes referred to as ambiguous requests as a result of such results being potentially applicable to multiple different entities and/or not able to determine applicability to a single entity without communicating with context service 330 to obtain information provided by one or more user applications.

FIG. 4 is a flow diagram illustrating a process (e.g., process 400) for responding to queries in accordance with some embodiments. Some operations in process 400 are, optionally, combined, the orders of some operations are, optionally, changed, and some operations are, optionally, omitted.

As described below, process 400 provides an intuitive way for responding to queries. Process 400 reduces the cognitive burden on a user, thereby creating a more efficient human-machine interface. For battery-operated computing devices, enabling a user to interact with such devices faster and more efficiently conserves power and increases the time between battery charges.

In some embodiments, process 400 is performed at a computer system (e.g., 100, 200, and/or 300) that is executing a first service (e.g., a digital assistant, a search process, a media application, a calendar application, and/or a browser) (e.g., 340). In some embodiments, the computer system is a phone, a watch, a tablet, a fitness tracking device, a wearable device, an accessory, a speaker, a light, a head-mounted display (HMD), and/or a personal computing device. In some embodiments, the first service is a system process that is part of an operating system of the computer system. In some embodiments, the first service is an application, such as a user application. In some embodiments, the first service is not part of the operating system of the computer system.

The first service receives (402) (e.g., from a process of the computer system, from another computer system different from the computer system, and/or from a user) a request to perform an operation (e.g., a request for content, a request to execute one or more commands, and/or a request to modify an appearance of a user interface object). In some embodiments, the computer system is in communication with and/or includes one or more input devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface). In some embodiments, receiving the request to perform the operation includes detecting, via the one or more input devices, an input (e.g., a verbal input and/or a non-verbal input) corresponding to the request to perform the operation. In some embodiments, a verbal input includes a verbal utterance, a sound, an audible request, an audible command, and/or an audible statement. In some embodiments, a non-verbal includes a tap input, a selection input, a swipe input, a hold-and-drag input, a gaze input, an air gesture input, mouse movement, and/or a mouse click.

In response to (404) receiving the request to perform the operation, in accordance with a determination that the request includes a reference (e.g., a generic reference, an ambiguous reference, and/or a reference that requires more information) applicable to a plurality of entities (e.g.., an entity of an application, an entity that is currently being displayed, and/or an entity that has been annotated by an application such that the second service is able to identify the entity and/or one or more properties of the entity) (e.g., the request only includes references that are applicable to a single entity), the first service sends (406), to a second service (e.g., annotation service and/or a service managing a data stream of displayed objects) (e.g., 330) different from the first service, a request for a list of entities (e.g., user interface objects, user interface elements, and/or content) currently displayed (and/or previously displayed) by the computer system (e.g., via one or more display generation components included in and/or in communication with the computer system). In some embodiments, the second service is a system process that is part of the operating system of the computer system. In some embodiments, the second service is an application, such as a user application. In some embodiments, the second service is not part of the operating system of the computer system. In some embodiments, an entity is an action performed by an application, an object provided by an application, content corresponding to an application, and/or a user input.

In response to (404) receiving the request to perform the operation, in accordance with a determination that the request does not include a reference (e.g., a generic reference, an ambiguous reference, and/or a reference that requires more information) applicable to a plurality of entities (e.g.., an entity of an application, an entity that is currently being displayed, and/or an entity that has been annotated by an application such that the second service is able to identify the entity and/or one or more properties of the entity) (e.g., the request only includes references that are applicable to a single entity), the first service performs (408) the operation without sending, to the second service, the request for a list of entities currently displayed by (and/or performed by and/or previously displayed) the computer system.

After (and/or as a result of) sending the request for a list of entities currently displayed by the computer system, the first service receives (410), from the second service, a first list of one or more entities currently displayed by the computer system.

In response to receiving the first list of one or more entities currently displayed by the computer system (and/or as a response to receiving the request to perform the operation), the first service performs (412) the operation based on the first list of one or more entities currently displayed by the computer system. In some embodiments, performing the operation based on the first list of one or more entities currently displayed by the computer system includes selecting one or more entities from the first list of one or more entities and performing the operation on the one or more entities without performing the operation on one or more other entities different from the one or more entities.

In some embodiments, performing the operation based on the first list of one or more entities currently displayed by the computer system includes: in accordance with a determination that the first list of one or more entities includes a first set of one or more entities, performing the operation on the first set of one or more entities; and in accordance with a determination that the first list of one or more entities includes a second set of one or more entities, different from the first set of one or more entities (e.g., without including the first set of one or more entities), performing the operation on the second set of one or more entities without performing the operation on the first set of one or more entities. In some embodiments, different operations are performed based on the first list of one or more entities. In some embodiments, in response to receiving the first list of one or more entities currently displayed by the computer system (and/or as a response to receiving the request to perform the operation) and in accordance with a determination that the first list of one or more entities includes a first set of one or more entities, the first service performs a first operation. In some embodiments, in response to receiving the first list of one or more entities currently displayed by the computer system (and/or as a response to receiving the request to perform the operation) and in accordance with a determination that the first list of one or more entities includes a second set of one or more entities, different from the first set of one or more entities (e.g., without including the first set of one or more entities), the first service performs a second operation different from the first operation (e.g., on the same entities and/or on different entities).

In some embodiments, in response to receiving the request to perform the operation and in accordance with a determination that the request is an ambiguous request (e.g., that the request cannot be resolved without additional information and/or without communicating with the second service), the first service sends, to the second service, the request for a list of entities (e.g., user interface objects, user interface elements, and/or content) currently displayed by the computer system (e.g., via one or more display generation components included in and/or in communication with the computer system).

In some embodiments, the first service is executing in a first process (e.g., an application process or a system process). In some embodiments, the second service is executing in a second process different (and/or separate) from the first process. In some embodiments, the second process is an application process.

In some embodiments, the request for a list of entities currently displayed by the computer system includes an identification of a type of entity (e.g., text entity, image entity, note entity, photo entity, video entity, widget entity, control entity, content entity, bolded entity, underlined entity, blue entity, red entity, size 12 font entity, button entity, and/or dropdown entity). In some embodiments, each entity in the first list of one or more entities is a first type of entity when the type of entity is the first type of entity. In some embodiments, each entity in the first list of one or more entities is a second type of entity, different from the first type of entity, (e.g., and/or not the first type of entity) when the type of entity is the second type of entity.

In some embodiments, the request for a list of entities currently displayed by the computer system includes an identification of a respective view (e.g., a respective user interface or a respective portion of a user interface). In some embodiments, each entity in the first list of one or more entities is from a first view when the respective view is the first view. In some embodiments, each entity in the first list of one or more entities is from a second view, different from the first view, (e.g., and/or not from the first view) when the respective view is the second view.

In some embodiments, the first service is executing in (and/or is part of) an application process (e.g., and not a system process) (and/or an application, such as an application downloaded from another computer system, such as a server). In some embodiments, the second service is executing in an application process (e.g., and not a system process). In some embodiments, the second service is executing in a system process.

In some embodiments, the first service is a digital assistant (e.g., a virtual assistant, a personal assistant, an artificial intelligent assistant, and/or an artificial intelligent process).

In some embodiments, the second service is executing in a system process (e.g., of an operating system of the computer system) (e.g., and not an application process).

Note that details of the processes described above with respect to process 400 (e.g., FIG. 4) are also applicable in an analogous manner to other processes described herein. For example, process 500 optionally includes one or more of the characteristics of the various processes described above with reference to process 400. For example, the first process of method 500 can be the second process of method 400. For brevity, these details are not repeated herein.

FIG. 5 is a flow diagram illustrating a process (e.g., process 500) for annotating objects in accordance with some embodiments. Some operations in process 500 are, optionally, combined, the orders of some operations are, optionally, changed, and some operations are, optionally, omitted.

As described below, process 500 provides an intuitive way for annotating objects. Process 500 reduces the cognitive burden on a user, thereby creating a more efficient human-machine interface. For battery-operated computing devices, enabling a user to interact with such devices faster and more efficiently conserves power and increases the time between battery charges.

In some embodiments, process 500 is performed at a computer system (e.g., 100, 200, and/or 300) that is executing a first process (e.g., annotation service and/or a service managing a data stream of displayed objects) (e.g., 300). In some embodiments, the computer system is a phone, a watch, a tablet, a fitness tracking device, a wearable device, an accessory, a speaker, a light, a head-mounted display (HMD), and/or a personal computing device. In some embodiments, the first process is a system process that is part of an operating system of the computer system. In some embodiments, the first process is an application, such as a user application. In some embodiments, the first process is not part of the operating system of the computer system.

The first process receives (502), from a second process (e.g., an application process) (e.g., 310 and/or 320) different from the first process, a request to store an annotation of a first user interface object (e.g., a first entity, a first user interface entity, a first user interface element, and/or first content) that is currently being displayed by (and/or was displayed by) the computer system. In some embodiments, the second process is and/or corresponds to an application, such as a user application. In some embodiments, the second process is not part of the operating system of the computer system. In some embodiments, in response to receiving the request to store an annotation of the first user interface object, the first process stores a first annotation of the first user interface object. In some embodiments, the first annotation includes an identifier of the first user interface object and/or one or more properties of the first user interface object. In some embodiments, the first user interface object is an object stored and/or managed by the second process.

After receiving the request to store an annotation of the first user interface object, the first process receives (504), from a third process (e.g., a service, such as a digital assistant, a search process, a media application, a calendar application, and/or a browser) (e.g., 340) different from the second process and the first process, a request for a list of entities currently displayed by (and/or performed by and/or previously displayed) the computer system. In some embodiments, the third process is a system process that is part of the operating system of the computer system. In some embodiments, the third process is and/or corresponds to an application, such as a user application. In some embodiments, the third process is not part of the operating system of the computer system.

In response to (506) receiving the request for a list of entities currently displayed by the computer system, in accordance with a determination that the request for a list of entities currently displayed by the computer system corresponds to the first user interface object, the first process provides (508) (e.g., sends, transmits, and/or stores in an accessible location), to the third process, a first list of one or more entities currently displayed by the computer system (and/or the first process identifies, to the third process, the first user interface object), wherein the first list includes an identification of the first user interface object. In some embodiments, the identification was generated by the first process and not by the second process and/or the third process. In some embodiments, the identification was generated by the second process and/or the third process. In some embodiments, the identification was received from the second process and/or the third process. In some embodiments, the first process sends the identification to the second process and/or the third process as a part of storing an annotation of the first user interface object.

In response to (506) receiving the request for the list of entities currently displayed by the computer system, in accordance with a determination that the request for a list of entities currently displayed by the computer system does not correspond to the first user interface object, the first process forgoes (510) provision of, to the third process, the first list of one or more entities currently displayed by the computer system (and/or the first process forgoes identification of, to the third process, the first user interface object).

In some embodiments, in response to receiving the request for a list of entities currently displayed by the computer system and in accordance with the determination that the request for a list of entities currently displayed by the computer system does not correspond to the first user interface object, the first process provides (e.g., sends, transmits, and/or stores in an accessible location), to the third process, a second list of one or more entities currently displayed by the computer system, wherein the second list is different from the first list, and wherein the second list does not include an identification of the first user interface object. In some embodiments, the second list includes an identification of a second user interface object different from the first user interface object.

In some embodiments, in response to receiving the request for a list of entities currently displayed by the computer system and in accordance with the determination that the request for a list of entities currently displayed by the computer system does not correspond to the first user interface object, the first process provides (e.g., sends, transmits, and/or stores in an accessible location), to the third process, an indication that the request does not correspond to a user interface object that is currently displayed by the computer system. In some embodiments, in response to receiving the request for a list of entities currently displayed by the computer system and in accordance with the determination that the request for a list of entities currently displayed by the computer system does not correspond to the first user interface object, the first process provides (e.g., sends, transmits, and/or stores in an accessible location), to the third process, a list of entities that does not include an identification of an entity (e.g., null and/or empty list).

In some embodiments, the determination that the request for a list of entities currently displayed by the computer system corresponds to the first user interface object includes a determination that the third process has permission (e.g., from the first process and/or the second process) to obtain information corresponding to the second process (e.g., user interface objects that have been annotated by the second process and/or user interface objects of the second process that are currently being displayed by the computer system).

In some embodiments, the determination that the request for a list of entities currently displayed by the computer system corresponds to the first user interface object includes a determination that the first user interface object is currently displayed by the computer system (e.g., while and/or at the time of receiving the request for a list of entities currently displayed by the computer system). In some embodiments, the determination that the first user interface object is currently displayed by the computer system includes a determination of what is currently displayed by the computer system. In some embodiments, the determination that the first user interface object is currently displayed by the computer system includes a determination of whether an annotation (e.g., made by the second process) of the first user interface object indicates that the first user interface object is currently displayed by the computer system.

In some embodiments, the determination that the request for a list of entities currently displayed by the computer system corresponds to the first user interface object includes a determination that a user interface including the first user interface object is currently active (e.g., that a currently active user interface includes the first user interface object) (e.g., while and/or at the time of receiving the request for a list of entities currently displayed by the computer system). In some embodiments, the determination that the user interface including the first user interface object is currently active includes a determination that an input (e.g., a selection input, a non-selection input, a gaze input, and/or a non-gaze input) (e.g., detected via one or more input devices that is in communication with and/or included in the computer system) corresponding to the user interface is being detected and/or has been detected within a predefined period of time (e.g., 0-60 seconds) of the determination that the user interface including the first user interface object is currently active. In some embodiments, the one or more input devices includes a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface. In some embodiments, the determination that the user interface including the first user interface object is currently active includes a determination that the user interface is a foreground process (e.g., and not a background process).

In some embodiments, the request for a list of entities currently displayed by the computer system includes an identification of a type of entity (e.g., text entity, image entity, note entity, photo entity, video entity, widget entity, control entity, content entity, bolded entity, underlined entity, blue entity, red entity, size 12 font entity, button entity, and/or dropdown entity). In some embodiments, each entity in the first list of one or more entities is a first type of entity when the type of entity is the first type of entity. In some embodiments, each entity in the first list of one or more entities is a second type of entity, different from the first type of entity, (e.g., and/or not the first type of entity) when the type of entity is the second type of entity.

In some embodiments, the request for a list of entities currently displayed by the computer system includes an identification of a respective view (e.g., a respective user interface or a respective portion of a user interface). In some embodiments, each entity in the first list of one or more entities is from a first view when the respective view is the first view. In some embodiments, each entity in the first list of one or more entities is from a second view, different from the first view, (e.g., and/or not from the first view) when the respective view is the second view.

In some embodiments, the first process receives, from a fourth process (e.g., an application process) (e.g., 310 and/or 320) different from the first process, the second process, and the third process, a request to store an annotation of a second user interface object (e.g., a first entity, a first user interface entity, a first user interface element, and/or first content) that is currently being displayed by the computer system, wherein the second user interface object is different (and/or separate) from the first user interface object, and wherein the request for a list of entities currently displayed by the computer system is received after receiving the request to store an annotation of the second user interface object. In some embodiments, the second process is and/or corresponds to an application, such as a user application. In some embodiments, the second process is not part of the operating system of the computer system. In some embodiments, in response to receiving the request to store an annotation of the first user interface object, the first process stores a first annotation of the first user interface object. In some embodiments, the first annotation includes an identifier of the first user interface object and/or one or more properties of the first user interface object. In some embodiments, in response to receiving the request for a list of entities currently displayed by the computer system, in accordance with a determination that the request for a list of entities currently displayed by the computer system corresponds to the first user interface object and that the request for a list of entities currently displayed by the computer system corresponds to the second user interface object, the first process provides (e.g., sends, transmits, and/or stores in an accessible location), to the third process, a third list of one or more entities currently displayed by the computer system (and/or the first process identifies, to the third process, the second user interface object), wherein the third list includes the identification of the first user interface object and an identification of the second user interface object. In some embodiments, the identification of the second user interface object was generated by the first process and not by the second process, the third process, and/or the fourth process. In some embodiments, the identification of the second user interface object was generated by the second process, the third process, and/or the fourth process. In some embodiments, the identification of the second user interface object was received from the second process, the third process, and/or the fourth process. In some embodiments, the first process sends the identification of the second user interface object to the second process, the third process, and/or the fourth process as a part of storing an annotation of the second user interface object. In some embodiments, in response to receiving the request for the list of entities currently displayed by the computer system, in accordance with a determination that the request for a list of entities currently displayed by the computer system does not correspond to the second user interface object (and/or that the request does not correspond to the first user interface object), the first process forgoes provision of, to the third process, the third list of one or more entities currently displayed by the computer system (and/or the first process forgoes identification of, to the third process, the second user interface object).

In some embodiments, the third process is (and/or includes) a first service (e.g., annotation service and/or a service managing a data stream of displayed objects). In some embodiments, the request for a list of entities currently displayed by the computer system is a first request. In some embodiments, after receiving the first request for a list of entities currently displayed by the computer system, the first process receives, from a second service (e.g., a service, such as a digital assistant, a search process, a media application, a calendar application, and/or a browser) different (and/or separate) from the first service, the first process, and the second process, a second request for a list of entities currently displayed by the computer system, wherein the second request is separate (and/or different) from the first request. In some embodiments, the second service is a system process that is part of the operating system of the computer system. In some embodiments, the second service is and/or corresponds to an application, such as a user application. In some embodiments, the second service is not part of the operating system of the computer system. In some embodiments, in response to receiving the second request, in accordance with a determination that the second request corresponds to the first user interface object, the first process provides (e.g., sends, transmits, and/or stores in an accessible location), to the second service, the first list of one or more entities currently displayed by the computer system (and/or the first process identifies, to the second service, the first user interface object). In some embodiments, in response to receiving the second request, in accordance with a determination that the second request does not correspond to the first user interface object, the first process forgoes provision of, to the second service, the first list of one or more entities currently displayed by the computer system (and/or the first process forgoes identification of, to the second service, the first user interface object).

In some embodiments, the request to store an annotation of the first user interface object includes a first list of one or more properties corresponding to the first user interface object. In some embodiments, the first annotation of the first user interface object includes the first list of one or more properties. In some embodiments, the determination that the request for a list of entities currently displayed by the computer system corresponds to the first user interface object includes a determination that the request for a list of entities currently displayed by the computer system corresponds to one or more properties (e.g., all or some) of the first list of one or more properties.

In some embodiments, the request for a list of entities currently displayed by the computer system includes a second list of one or more properties (e.g., the same as or different from the first list of one or more properties). In some embodiments, the determination that the request for a list of entities currently displayed by the computer system corresponds to the first user interface object includes a determination that one or more properties (e.g., all or some) of the second list of one or more properties corresponds to one or more properties (e.g., all or some) of the first list of one or more properties.

Note that details of the processes described above with respect to process 500 (e.g., FIG. 5) are also applicable in an analogous manner to the processes described herein. For example, process 400 optionally includes one or more of the characteristics of the various processes described herein with reference to process 500. For example, the first list of one or more entities of method 400 can include the identification of the first user interface object of method 500. For brevity, these details are not repeated herein.

In some embodiments, one or more of processes 400 and 500 (FIGS. 4 and 5) is performed at a first computer system (as described herein) via a system process (e.g., an operating system process) that is different from one or more applications executing and/or installed on the first computer system.

In some embodiments, one or more of processes 400 and 500 (FIGS. 4 and 5) is performed at a first computer system (as described herein) by an application that is different from a system process. In some embodiments, the instructions of the application, when executed, control the first computer system to perform one or more of processes 400 and 500 (FIGS. 4 and 5) by calling an application programming interface (API) provided by the system process. In some embodiments, the application performs at least a portion of one or more of processes 400 and 500 (FIGS. 4 and 5) without calling the API. In some embodiments, the application can be any suitable type of application, including, for example, one or more of: a browser application, a super-app that functions as an application execution environment for plug-ins, widgets or other applications, a fitness application, a health application, a digital payments application, a media application, a social network application, a messaging application, and/or a maps application. In some embodiments, the application is an application that is pre-installed on the first computer system at purchase (e.g., a first party application). In other embodiments, the application is an application that is provided to the first computer system via an operating system update file (e.g., a first party application). In other embodiments, the application is an application that is provided via an application store. In some implementations, the application store is pre-installed on the first computer system at purchase (e.g., a first party application store) and allows download of one or more applications. In some embodiments, the application store is a third party application store (e.g., an application store that is provided by another device, downloaded via a network, and/or read from a storage device). In some embodiments, the application is a third party application (e.g., an app that is provided by an application store, downloaded via a network, and/or read from a storage device). In some embodiments, the application controls the first computer system to perform one or more of processes 400 and 500 (FIGS. 4 and 5) by calling an application programming interface (API) provided by the system process using one or more parameters. In some embodiments, exemplary APIs provided by the system process include one or more of: a Pairing API (e.g., for establishing secure connection, e.g., with an accessory), a Device detection API (e.g., for locating nearby devices, e.g., Apple TVs, other iPhones), a UIKit API (e.g., for generating user interfaces), a Location Detection API, a FindMy API, a Maps API, a Health Sensor API, a Sensor API, a Messaging API, a Push Notification API, a Streaming API, a collaboration API, a video conferencing API (e.g., FaceTime/SharePlay API), a web browser API (e.g., WebKit API), a CarPlay API, a Networking API, a WiFi API, a Bluetooth API, an NFC API, a UWB API, a Fitness API, a HomeKit API, NameDrop API, Photos API, Camera API, and/or an Image Processing API. In some embodiments, at least one API is a software module (e.g., a collection of computer-readable instructions) that provides an interface that allows a different module (e.g., API calling module) to access and use one or more functions, processes, procedures, data structures, classes, and/or other services provided by an OS implementation module of the system process. The API can define one or more parameters that are passed between the API calling module and the OS implementation module. The OS implementation module is an operating system software module (e.g., a collection of computer-readable instructions) that is constructed to perform an operation in response to receiving an API call via the API. In some embodiments, the OS implementation module is constructed to provide an API response (via the API) as a result of processing an API call.

The foregoing description, for purpose of explanation, has been described with reference to specific examples. However, the illustrative discussions above are not intended to be exhaustive or to limit the disclosure to the precise forms disclosed. Many modifications and variations are possible in view of the above teachings. The examples were chosen and described in order to best explain the principles of the techniques and their practical applications. Others skilled in the art are thereby enabled to best utilize the techniques and various examples with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to improve how a device interacts with a user. The present disclosure contemplates that in some instances, this gathered data can include personal information data that uniquely identifies or can be used to contact or locate a specific person. Such personal information data can include demographic data, location-based data, telephone numbers, email addresses, home addresses, or any other identifying information.

The present disclosure recognizes that the use of such personal information data, in the present technology, can be used to the benefit of users. For example, the personal information data can be used to change how a device interacts with a user. Accordingly, use of such personal information data enables better user interactions. Further, other uses for personal information data that benefit the user are also contemplated by the present disclosure.

The present disclosure further contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of image capture, the present technology can be configured to allow users to select to "opt in" or "opt out" of participation in the collection of personal information data during registration for services.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be displayed to users by inferring location based on non-personal information data or a bare minimum amount of personal information, such as the content being requested by the device associated with a user or other non-personal information.

## Claims

1. A method performed by a first service, the method comprising:
at a computer system that is executing the first service:
receiving a request to perform an operation;
in response to receiving the request to perform the operation:
in accordance with a determination that the request includes a reference applicable to a plurality of entities, sending, to a second service different from the first service, a request for a list of entities currently displayed by the computer system; and
in accordance with a determination that the request does not include a reference applicable to a plurality of entities, performing the operation without sending, to the second service, the request for a list of entities currently displayed by the computer system;
after sending the request for a list of entities currently displayed by the computer system, receiving, from the second service, a first list of one or more entities currently displayed by the computer system; and
in response to receiving the first list of one or more entities currently displayed by the computer system, performing the operation based on the first list of one or more entities currently displayed by the computer system.

2. The method of claim 1, wherein performing the operation based on the first list of one or more entities currently displayed by the computer system includes:
in accordance with a determination that the first list of one or more entities includes a first set of one or more entities, performing the operation on the first set of one or more entities; and
in accordance with a determination that the first list of one or more entities includes a second set of one or more entities, different from the first set of one or more entities, performing the operation on the second set of one or more entities without performing the operation on the first set of one or more entities.

3. The method of any one of claims 1-2, further comprising:
in response to receiving the request to perform the operation and in accordance with a determination that the request is an ambiguous request, sending, to the second service, the request for a list of entities currently displayed by the computer system.

4. The method of any one of claims 1-3, wherein the first service is executing in a first process, wherein the second service is executing in a second process different from the first process, and wherein the second process is an application process.

5. The method of any one of claims 1-4, wherein the request for a list of entities currently displayed by the computer system includes an identification of a type of entity.

6. The method of any one of claims 1-5, wherein the request for a list of entities currently displayed by the computer system includes an identification of a view.

7. The method of any one of claims 1-6, wherein the first service is executing in an application process.

8. The method of any one of claims 1-7, wherein the first service is a digital assistant.

9. The method of any one of claims 1-8, wherein the second service is executing in a system process.

10. A non-transitory computer-readable medium storing one or more programs configured to be executed by one or more processors of a computer system that is executing a first service, the one or more programs including instructions for performing the method of any one of claims 1-9.

11. A computer system that is executing a first service, comprising:
one or more processors; and
memory storing one or more programs configured to be executed by the one or more processors, the one or more programs including instructions for performing the method of any one of claims 1-9.
